# EUROPEAN PATENT APPLICATION

(11) **EP 4 712 524 A1**
(43) Date of publication of application: **18.03.2026**
(21) Application number: 24818466.5
(22) Date of filing: 16.05.2024
(51) Int. Cl.: H04W 8/02, H04W 8/18

(54) **METHOD FOR CREATING CONFIGURATION INFORMATION, AND COMMUNICATION APPARATUS**

(30) Priority: 09.06.2023 CN 202310688390
(71) Applicant: Huawei Technologies Co., Ltd., Shenzhen, Guangdong 518129 (CN)
(72) Inventor: GUO, Tao, Shenzhen, Guangdong 518129 (CN); WU, Yizhuang, Shenzhen, Guangdong 518129 (CN); LIU, Wenfeng, Shenzhen, Guangdong 518129 (CN)
(74) Representative: Thun, Clemens
(86) International application number: PCT/CN2024/093614
(87) International publication number: WO 2024/250933

(57) **Abstract**

This application provides a method for creating configuration information and a communication apparatus. A core network device (for example, a network exposure function network element or a data management network element) may pre-create application configuration information for an application function network element. The application configuration information includes subscription information of all or some terminal devices related to the application function network element. When the application function network element requests a service, the core network device may query data within a range of the application configuration information. This helps improve query efficiency compared with querying data in all subscription data.

## Description

This application claims priority to Chinese Patent Application No. 202310688390.5, filed with the China National Intellectual Property Administration on June 9, 2023 and entitled "METHOD FOR CREATING CONFIGURATION INFORMATION AND COMMUNICATION APPARATUS", which is incorporated herein by reference in its entirety.

### TECHNICAL FIELD

Embodiments of this application relate to the communication field, and more specifically, to a method for creating configuration information and a communication apparatus.

### BACKGROUND

Currently, application function network elements are mainly classified into two types. A first type is an application function network element that is deployed by an operator and that is considered to be trusted by the operator, and the application function network element of this type may directly interact with another network function in a core network. A second type is an application function network element whose direct access to a network function is not allowed by an operator, for example, a third-party application function network element, and the application function network element of this type may interact with another network function in the core network through a network exposure function network element.

When the second-type application function network element requests a service from a network through the network exposure function network element, the network exposure function network element performs an authorization check on the service request. In a process of the authorization check, the network exposure function network element determines, based on the service request and a local policy of the operator, whether a user consent check needs to be performed, in other words, checks whether a terminal device allows the application function network element to obtain data. When the user consent check needs to be performed, the network exposure function network element needs to obtain subscription data of the terminal device from a data management network element, to perform the user consent check.

As the scale of terminal device data required by the service of the application function network element continuously increases, query efficiency of an existing manner of querying the subscription data of the terminal device becomes lower. This affects service experience of the application function network element.

### SUMMARY

This application provides a method for creating configuration information and a communication apparatus, to help improve data query efficiency and improve service experience of an application function network element.

According to a first aspect, a method for creating configuration information is provided. The method may be performed by a data management network element, or may be performed by a module or a unit (for example, a chip) in the data management network element. The data management network element or the module or the unit in the data management network element is collectively referred to as a data management network element below.

The method includes: A data management network element receives a first request message from a network exposure function network element, where the first request message is used to request to create application configuration information, and the first request message includes identification information of an application function network element; the data management network element determines subscription data of one or more target terminal devices based on the identification information of the application function network element; the data management network element creates the application configuration information based on the subscription data of the one or more target terminal devices; and the data management network element sends, to the network exposure function network element, a first response message in response to the first request message.

According to the foregoing method, the data management network element may pre-create the application configuration information for the application function network element based on the request of the network exposure function network element. Subsequently, when the application function network element requests a service, the data management network element may obtain the application configuration information once or query data in a range of the application configuration information. In comparison with the conventional technology in which the data management network element queries all subscription data one by one based on identification information of the terminal device, this helps improve query efficiency, to improve service experience of the application function network element.

With reference to the first aspect, in a possible implementation, the subscription data of the one or more target terminal devices includes the identification information of the application function network element.

With reference to the first aspect or any implementation of the first aspect, in another possible implementation, a subscription data type corresponding to the application configuration information is application subscription data, application configuration data, or application authorization data.

For example, when the application configuration information is stored in the data management network element, the subscription data type corresponding to the application configuration information is the application subscription data, the application configuration data, or the application authorization data.

The subscription data type is a data type that has been defined in a protocol. In the foregoing method, the application configuration information is stored by adding a new type under the subscription data type, and an existing data organization format is slightly changed.

With reference to the first aspect or any implementation of the first aspect, in another possible implementation, the application configuration information corresponds to application subscription data, application configuration data, or application authorization data, and a subscription data type corresponding to the application configuration information is user consent.

For example, when the application configuration information is stored in a data storage network element, the application configuration information corresponds to the application subscription data, the application configuration data, or the application authorization data, and the subscription data type corresponding to the application configuration information is the user consent.

According to the foregoing method, the application configuration information may be stored by adding the application subscription data, the application configuration data, or the application authorization data that is parallel to the subscription data of the terminal device.

With reference to the first aspect or any implementation of the first aspect, in another possible implementation, the method further includes: The data management network element sends the application configuration information to a data storage network element. In other words, the data management network element stores the application configuration information in the data storage network element.

With reference to the first aspect or any implementation of the first aspect, in another possible implementation, a data set corresponding to the application configuration information is subscription data or application data, and a data subset corresponding to the application configuration information is application subscription data, application configuration data, or application authorization data.

The subscription data and the application data are data types that have been defined in a protocol. In the foregoing method, the application configuration information is stored by adding a new type under the subscription data or the application data, and an existing data organization format is slightly changed.

With reference to the first aspect or any implementation of the first aspect, in another possible implementation, a data set corresponding to the application configuration information is application data, application subscription data, application configuration data, or application authorization data.

In the foregoing method, the application configuration information is stored by adding a new data type that is parallel to the subscription data and the application data, and an existing data organization format is slightly changed.

With reference to the first aspect or any implementation of the first aspect, in another possible implementation, a data subset corresponding to the application configuration information is user consent.

With reference to the first aspect or any implementation of the first aspect, in another possible implementation, a data key corresponding to the application configuration information is the identification information of the application function network element and/or first subscription identification information corresponding to the application configuration information.

For example, when one application function network element corresponds to one piece of application configuration information, the application configuration information can be uniquely determined based on the identification information of the application function network element, the subscription identification information, or a combination of the identification information of the application function network element and the subscription identification information.

For example, when one application function network element corresponds to a plurality of pieces of application configuration information, the application configuration information can be uniquely determined based only on the subscription identification information, or a combination of the identification information of the application function network element and the subscription identification information.

That the data key corresponding to the application configuration information is the identification information of the application function network element and/or the first subscription identification information corresponding to the application configuration information may be understood as that: Information stored in the data key in a data organization format corresponding to the application configuration information is the identification information of the application function network element and/or the first subscription identification information corresponding to the application configuration information.

In the foregoing method, the identification information of the application function network element and/or the first subscription identification information corresponding to the application configuration information are/is stored in the data key corresponding to the application configuration information. In this way, the application configuration information is subsequently retrieved by using the identification information of the application function network element and/or the first subscription identification information corresponding to the application configuration information as the data key.

With reference to the first aspect or any implementation of the first aspect, in another possible implementation, the first response message further includes the first subscription identification information or the identification information of the application function network element.

With reference to the first aspect or any implementation of the first aspect, in another possible implementation, the first request message further includes the first subscription identification information.

With reference to the first aspect or any implementation of the first aspect, in another possible implementation, the first request message further includes at least one of the following information: a first information type, or identification information of one or more first terminal devices, where the first information type indicates a type of data that the application function network element expects to obtain, and the identification information of the one or more first terminal devices indicates terminal devices that the application function network element expects to obtain data from, or indicates terminal devices whose data is expected to be included in the application configuration information.

According to the foregoing method, the data management network element creates the application configuration information that satisfies the first information type or the identification information of the one or more first terminal devices, so that a data range of the application configuration information is smaller. Subsequently, when the application function network element requests a service, the data management network element may query data in the application configuration information with the smaller range. This helps further improve query efficiency.

With reference to the first aspect or any implementation of the first aspect, in another possible implementation, the first request message further includes a first usage purpose and/or a first usage range, where the first usage purpose indicates a usage purpose after the data is obtained, and the first usage range indicates a usage range after the data is obtained.

According to the foregoing method, the data management network element creates the application configuration information that satisfies the first usage purpose and/or the first usage range, so that a data range of the application configuration information is smaller. Subsequently, when the application function network element requests a service, the data management network element may query data in the application configuration information with the smaller range. This helps further improve query efficiency.

With reference to the first aspect or any implementation of the first aspect, in another possible implementation, the first information type or the identification information of the one or more first terminal devices is stored as a data sub key or a field corresponding to the application configuration information.

With reference to the first aspect or any implementation of the first aspect, in another possible implementation, the application configuration information includes identification information or the subscription data of the one or more target terminal devices.

With reference to the first aspect or any implementation of the first aspect, in another possible implementation, the one or more target terminal devices are terminal devices that allow the application function network element to obtain data.

With reference to the first aspect or any implementation of the first aspect, in another possible implementation, the method further includes: The data management network element receives a second request message from the network exposure function network element, where the second request message is used to query data, and the second request message includes index information of the application configuration information; the data management network element obtains the application configuration information based on the index information; and the data management network element sends a second response message to the network exposure function network element, where the second response message includes a part or all of the application configuration information.

According to the foregoing method, because the data management network element pre-creates the application configuration information for the application function network element, when the application function network element requests a service, the data management network element may obtain the application configuration information once or query data in a range of the application configuration information. In comparison with the conventional technology in which the data management network element queries all subscription data one by one based on the identification information of the terminal device, this helps improve query efficiency.

With reference to the first aspect or any implementation of the first aspect, in another possible implementation, a value of a subscription data type of the second request message corresponds to application subscription data, application configuration data, or application authorization data; or a value of a subscription data type of the second request message corresponds to user consent.

With reference to the first aspect or any implementation of the first aspect, in another possible implementation, the index information includes the identification information of the application function network element and/or the first subscription identification information of the application configuration information.

With reference to the first aspect or any implementation of the first aspect, in another possible implementation, a value of a data key of the second request message corresponds to the identification information of the application function network element and/or the first subscription identification information of the application configuration information.

With reference to the first aspect or any implementation of the first aspect, in another possible implementation, the second request message further includes at least one of the following information: a second information type, a second usage range, a second usage purpose, or identification information of one or more second terminal devices.

According to the foregoing method, the network exposure function network element may further accelerate a query speed by attaching additional condition information such as an information type, a usage purpose, a usage range, and an identification information list of the terminal device.

With reference to the first aspect or any implementation of the first aspect, in another possible implementation, the second information type, the second usage range, the second usage purpose, or the identification information of the one or more second terminal devices is carried in a data sub key of the second request message.

With reference to the first aspect or any implementation of the first aspect, in another possible implementation, the data management network element is a unified data management (unified data management, UDM), and the data storage network element is a unified data repository (unified data repository, UDR).

According to a second aspect, a method for creating configuration information is provided. The method may be performed by a network exposure function network element, or may be performed by a module or a unit (for example, a chip) in the network exposure function network element. The network exposure function network element or the module or the unit in the network exposure function network element is collectively referred to as a network exposure function network element below.

For terms or features that are in the second aspect or the implementations of the second aspect and that are the same as those in the first aspect or the implementations of the first aspect, refer to the first aspect or the implementations of the first aspect. For technical effects of the second aspect or the implementations of the second aspect, refer to the technical effects of the first aspect or the implementations of the first aspect.

The method includes: A network exposure function network element receives a fourth request message from an application function network element, where the fourth request message is used to request to create application configuration information or is used to request a second service, and the fourth request message includes identification information of the application function network element; the network exposure function network element sends a first request message to a data management network element based on the fourth request message, where the first request message is used to request to create the application configuration information, and the first request message includes the identification information of the application function network element; and the network exposure function network element receives a first response message from the data management network element in response to the first request message.

With reference to the second aspect, in a possible implementation, the fourth request message further includes at least one of the following information: a first information type, or identification information of one or more first terminal devices.

With reference to the second aspect or any implementation of the second aspect, in another possible implementation, the fourth request message further includes a first usage purpose and/or a first usage range.

With reference to the second aspect or any implementation of the second aspect, in another possible implementation, when the fourth request message is used to request to create the application configuration information, the fourth request message may further include a data type of the application configuration information that is requested to be created. In other words, the application function network element specifies the data type of the application configuration information.

For example, the data type of the application configuration information may be application subscription data, application configuration data, or application authorization data.

With reference to the second aspect or any implementation of the second aspect, in another possible implementation, the method further includes: The network exposure function network element receives a third request message from the application function network element, where the third request message is used to request a first service, the third request message includes the identification information of the application function network element and/or second subscription identification information, and the second subscription identification information corresponds to the application configuration information; the network exposure function network element sends a second request message to the data management network element based on the third request message, where the second request message is used to query data, and the second request message includes index information of the application configuration information; the network exposure function network element receives a part or all of the application configuration information from the data management network element; and the network exposure function network element performs an authorization check on the first service based on the part or all of the application configuration information.

With reference to the second aspect or any implementation of the second aspect, in another possible implementation, the third request message further includes at least one of the following information: a second information type, a second usage range, a second usage purpose, or identification information of one or more second terminal devices.

With reference to the second aspect or any implementation of the second aspect, in another possible implementation, the third request message further includes indication information, and the indication information indicates that the application configuration information has been created.

The indication information indicates that the application configuration information has been created, or may be replaced with the following: The indication information indicates that the application configuration information has been created, the indication information indicates that the authorization check may be performed by using the application configuration information, or the indication information indicates that the application configuration information may be obtained by using the identification information of the application function network element and/or the second subscription identification information.

It is considered that some network exposure function network elements support performing the authorization check using the application configuration information to, and some network exposure function network elements may not support performing the authorization check by using the application configuration information, or it is considered that the application function network element may switch the network exposure function network element, and a new network exposure function network element may not know that the identification information of the application function network element and/or the second subscription identification information can be used to obtain the application configuration information to perform the authorization check. In the foregoing method, the indication information is included in the third request message to indicate that the application configuration information has been created. In this way, when the network exposure function network element that supports performing the authorization check by using the application configuration information receives the third request message, the network exposure function network element may obtain, based on the indication information, the application configuration information by using the identification information of the application function network element and/or the second subscription identification information, to perform the authorization check based on the application configuration information. When a network exposure function network element that does not support performing the authorization check by using the application configuration information receives the third request message, the NEF may ignore the indication information.

According to a third aspect, a method for creating configuration information is provided. The method may be performed by a network exposure function network element, or may be performed by a module or a unit (for example, a chip) in the network exposure function network element. The network exposure function network element or the module or the unit in the network exposure function network element is collectively referred to as a network exposure function network element below.

For descriptions of terms or features that are in the third aspect or the implementations of the third aspect and that are the same as those in the first aspect and the second aspect or the implementations of the first aspect and the second aspect, refer to the first aspect and the second aspect or the implementations of the first aspect and the second aspect. For technical effects, refer to the technical effects in the first aspect and the second aspect or the implementations of the first aspect and the second aspect.

The method includes: A network exposure function network element receives a fourth request message from an application function network element, where the fourth request message is used to request to create application configuration information or is used to request a second service, and the fourth request message includes identification information of the application function network element; the network exposure function network element obtains subscription data of one or more terminal devices from a data management network element based on the identification information of the application function network element; the network exposure function network element creates the application configuration information based on the subscription data of the one or the one or more terminal devices; and the network exposure function network element sends the application configuration information to a data storage network element.

According to the foregoing method, the network exposure function network element may pre-create the application configuration information for the application function network element, and store the application configuration information in the data storage network element. Subsequently, when the application function network element requests a service, the network exposure function network element may obtain the application configuration information once or query data in a range of the application configuration information. In comparison with the conventional technology in which the data management network element queries all subscription data one by one based on identification information of the terminal device, this helps improve query efficiency, to improve service experience of the application function network element.

With reference to the third aspect, in a possible implementation, a data set corresponding to the application configuration information is subscription data or application data, and a data subset corresponding to the application configuration information is application subscription data, application configuration data, or application authorization data.

With reference to the third aspect or any implementation of the first aspect, in another possible implementation, a data set corresponding to the application configuration information is application data, application subscription data, application configuration data, or application authorization data.

With reference to the third aspect or any implementation of the third aspect, in another possible implementation, a data subset corresponding to the application configuration information is user consent.

With reference to the third aspect or any implementation of the third aspect, in another possible implementation, a data key corresponding to the application configuration information is the identification information of the application function network element or first subscription identification information corresponding to the application configuration information.

With reference to the third aspect or any implementation of the third aspect, in another possible implementation, the fourth request message further includes at least one of the following information: a first information type, or identification information of one or more first terminal devices.

With reference to the third aspect or any implementation of the third aspect, in another possible implementation, the fourth request message further includes a first usage purpose and/or a first usage range.

With reference to the third aspect or any implementation of the third aspect, in another possible implementation, the first information type or the identification information of the one or more first terminal devices is stored as a data sub key or a field corresponding to the application configuration information.

With reference to the third aspect or any implementation of the third aspect, in another possible implementation, the application configuration information includes identification information or subscription data of one or more target terminal devices, the one or more target terminal devices belong to the one or more terminal devices, and the subscription data of the one or more target terminal devices includes the identification information of the application function network element.

With reference to the third aspect or any implementation of the third aspect, in another possible implementation, the one or more target terminal devices are terminal devices that allow the application function network element to obtain data.

With reference to the third aspect or any implementation of the third aspect, in another possible implementation, the method further includes: The network exposure function network element receives a third request message from the application function network element, where the third request message is used to request a first service, the third request message includes the identification information of the application function network element and/or second subscription identification information, and the second subscription identification information corresponds to the application configuration information; the network exposure function network element sends a fifth request message to the data storage network element based on the third request message, where the fifth request message is used to query data, and the fifth request message includes index information of the application configuration information; the network exposure function network element receives a fifth response message from the data storage network element, where the fifth response message includes a part or all of the application configuration information; and the network exposure function network element performs an authorization check on the first service based on the part or all of the application configuration information.

With reference to the third aspect or any implementation of the third aspect, in another possible implementation, the fifth request message further includes at least one of the following information: a second information type, a second usage range, a second usage purpose, or identification information of one or more second terminal devices.

With reference to the third aspect or any implementation of the third aspect, in another possible implementation, the second information type, the second usage range, the second usage purpose, or the identification information of the one or more second terminal devices is carried in a data sub key of the fifth request message.

With reference to the third aspect or any implementation of the third aspect, in another possible implementation, the data management network element is a UDM, and the data storage network element is a UDR.

According to a fourth aspect, a method for creating configuration information is provided. The method may be performed by an application function network element, or may be performed by a module or a unit (for example, a chip) in the application function network element. The application function network element or the module or the unit in the application function network element is collectively referred to as an application function network element below.

For descriptions of terms or features that are in the fourth aspect or the implementations of the fourth aspect and that are the same as those in the second aspect and the third aspect or the implementations of the second aspect and the third aspect, refer to the second aspect and the third aspect or the implementations of the second aspect and the third aspect. For technical effects, refer to the technical effects in the second aspect and the third aspect or the implementations of the second aspect and the third aspect.

The method includes: An application function network element sends a fourth request message to a network exposure function network element, where the fourth request message is used to request to create application configuration information or is used to request a second service, and the fourth request message includes identification information of the application function network element; and the application function network element receives a fourth response message from the network exposure function network element, where the fourth response message indicates that the application configuration information is successfully created or includes data of a terminal device that passes an authorization check.

With reference to the fourth aspect, in a possible implementation, the method further includes: The application function network element sends a third request message to the network exposure function network element, where the third request message is used to request a first service, the third request message includes the identification information of the application function network element and/or second subscription identification information, and the second subscription identification information corresponds to the application configuration information.

According to a fifth aspect, a method for creating configuration information is provided. The method may be performed by a data storage network element, or may be performed by a module or a unit in the data storage network element. The data storage network element or the module or the unit in the data storage network element is collectively referred to as a data storage network element below.

For descriptions of terms or features that are in the fifth aspect or the implementations of the fifth aspect and that are the same as those in the first aspect and the third aspect or the implementations of the first aspect and the third aspect, refer to the first aspect or the implementations of the first aspect. For technical effects, refer to the technical effects in the first aspect and the third aspect or the implementations of the first aspect and the third aspect.

The method includes: A data storage network element receives application configuration information from a data management network element or a network exposure function network element; and the data storage network element stores the application configuration information.

With reference to the fifth aspect, in a possible implementation, the method further includes: The data storage network element receives a fifth request message from the data management network element or the network exposure function network element, where the fifth request message is used to query data, and the fifth request message includes index information of the application configuration information; the data storage network element obtains the application configuration information based on the index information; the data storage network element sends a fifth response message to the data management network element or the network exposure function network element, where the fifth response message includes a part or all of the application configuration information.

According to a sixth aspect, a communication apparatus is provided. The apparatus is configured to perform the method provided in any one of the foregoing aspects or the implementations of the foregoing aspects. Specifically, the apparatus may include a unit and/or a module configured to perform the method provided in any one of the foregoing aspects or the implementations of the foregoing aspects, for example, a processing unit and/or a communication unit.

In an implementation, the apparatus is a data management network element, a network exposure function network element, a data storage network element, or an application function network element. When the apparatus is the data management network element, the network exposure function network element, the data storage network element, or the application function network element, the communication unit may be a transceiver, an input/output interface, or a communication interface; and the processing unit may be at least one processor. Optionally, the transceiver is a transceiver circuit. Optionally, the input/output interface is an input/output circuit.

In another implementation, the apparatus is a chip, a chip system, or a circuit used in a data management network element, a network exposure function network element, a data storage network element, or an application function network element. When the apparatus is the chip, the chip system, or the circuit used in the data management network element, a network exposure function network element, a data storage network element, or an application function network element, the communication unit may be an input/output interface, an interface circuit, an output circuit, an input circuit, a pin, a related circuit, or the like on the chip, the chip system, or the circuit; and the processing unit may be at least one processor, processing circuit, logic circuit, or the like.

According to a seventh aspect, a communication apparatus is provided. The apparatus includes a memory, configured to store a program; and at least one processor, configured to execute the computer program or instructions stored in the memory, to perform the method provided in any one of the foregoing aspects or the implementations of the foregoing aspects.

In an implementation, the apparatus is a data management network element, a network exposure function network element, a data storage network element, or an application function network element.

In another implementation, the apparatus is a chip, a chip system, or a circuit used in a data management network element, a network exposure function network element, a data storage network element, or an application function network element.

According to an eighth aspect, a communication apparatus is provided. The apparatus includes at least one processor and a communication interface. The at least one processor is configured to obtain, through the communication interface, a computer program or instructions stored in a memory, to perform the method provided in any one of the foregoing aspects or the implementations of the foregoing aspects. The communication interface may be implemented by hardware or software.

In an implementation, the apparatus further includes the memory.

According to a ninth aspect, a processor is provided, and is configured to perform the methods provided in the foregoing aspects.

Unless otherwise specified, or if operations such as sending and obtaining/receiving related to the processor do not conflict with actual functions or internal logic in related descriptions, the operations may be understood as operations such as output, receiving, and input of the processor, or may be understood as sending and receiving operations performed by a radio frequency circuit and an antenna. This is not limited in this application.

According to a tenth aspect, a computer-readable storage medium is provided. The computer-readable medium stores program code to be executed by a device, and the program code is used to perform the method provided in any one of the foregoing aspects or the implementations of the foregoing aspects.

According to an eleventh aspect, a computer program product including instructions is provided. When the computer program product runs on a computer, the computer is caused to perform the method provided in any one of the foregoing aspects or the implementations of the foregoing aspects.

According to a twelfth aspect, a chip is provided. The chip includes a processor and a communication interface. The processor reads, through the communication interface, instructions stored in a memory, to perform the method provided in any one of the foregoing aspects or the implementations of the foregoing aspects. The communication interface may be implemented by hardware or software.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the foregoing aspects or the implementations of the foregoing aspects.

When the method provided in this application is performed by the chip, a quantity of chips that specifically implement the method in this application is not limited in this application. For example, the method may be performed by one chip, or may be performed by two or more chips. In addition, when there are two or more chips that implement the method of this application, a chip vendor is not limited. The chips may be from a same vendor or from different vendors.

According to a thirteenth aspect, a communication system is provided. The communication system includes at least one of the foregoing data management network element, network exposure function network element, data storage network element, or application function network element.

According to a fourteenth aspect, a computer program is provided. When the computer program runs on a computer, the method according to any one of the foregoing aspects or the implementations of the foregoing aspects is performed.

### BRIEF DESCRIPTION OF DRAWINGS

FIG. 1 is a diagram of a network architecture applicable to an embodiment of this application;
FIG. 2 is a schematic flowchart of a method 200 for creating configuration information according to this application;
FIG. 3 is a schematic flowchart of a method 300 for creating configuration information according to this application;
FIG. 4 is a diagram of a structure of a communication apparatus according to this application; and
FIG. 5 is a diagram of another structure of a communication apparatus according to this application.

### DESCRIPTION OF EMBODIMENTS

For ease of understanding of embodiments of this application, before embodiments of this application are described, the following descriptions are first provided.

"Indicating" or "indicate" may include direct indicating and indirect indicating, or "indicating" or "indicate" may be explicitly and/or implicitly indicating. Various numbers such as first and second are merely used for differentiation for ease of description, and are not used to limit the scope of embodiments of this application, for example, to distinguish between different messages and different information. "Predefinition" may be implemented by pre-storing corresponding code or a corresponding table in a device, or may be implemented in another manner that may be used for indicating related information. A specific implementation of "predefinition" is not limited in this application. A related "protocol" may be a standard protocol in the communication field, for example, may include a long term evolution (long term evolution, LTE) protocol, a new radio (new radio, NR) protocol, and a related protocol applied to a future communication system. This is not limited in this application. The words such as "for example", "example", and "in an (another) example" are used to represent giving an example, an illustration, or a description. Any embodiment or design scheme described as an "example" in this application should not be explained as being more preferred or having more advantages than another embodiment or design scheme. The terms "include", "contain", "have", and their variants all mean "include but are not limited to", unless otherwise specifically emphasized in another manner. "At least one" means one or more, and "a plurality of' means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, and c may indicate a, b, c, a and b, a and c, b and c, or a, b, and c. Each of a, b, and c may be in a singular form or a plural form. Related descriptions about sending a message, information, or data by a network element A to a network element B, and receiving, by the network element B, the message, information, or data from the network element A are intended to describe a network element to which the message, information, or data is to be sent. Whether the message, information, or data is directly sent or indirectly sent through another network element is not limited. Descriptions such as "when...", "in a case of...", and "if' all mean that a device performs corresponding processing in an objective case, and are not intended to limit time, and the device is not required to perform a determining action during implementation. This does not mean that there is another limitation.

In addition, a network architecture and a service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of a new service scenario, the technical solutions provided in embodiments of this application are also applicable to a similar technical problem.

The following describes a communication system to which embodiments of this application may be applied.

Embodiments of this application may be applied to various communication systems, for example, an LTE system, a frequency division duplex (frequency division duplex, FDD) system, a time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or an NR system, a 6th generation (6th generation, 6G) system, or a future communication system. The 5G mobile communication system in this application includes a non-standalone (non-standalone, NSA) 5G mobile communication system or a standalone (standalone, SA) 5G mobile communication system. The communication system may alternatively be a public land mobile communication network (public land mobile network, PLMN), a device-to-device (device-to-device, D2D) communication system, a machine to machine (machine to machine, M2M) communication system, an internet of things (internet of Things, IoT) communication system, a vehicle to everything (vehicle to everything, V2X) communication system, an uncrewed aerial vehicle (uncrewed aerial vehicle, UAV) communication system, or another communication system.

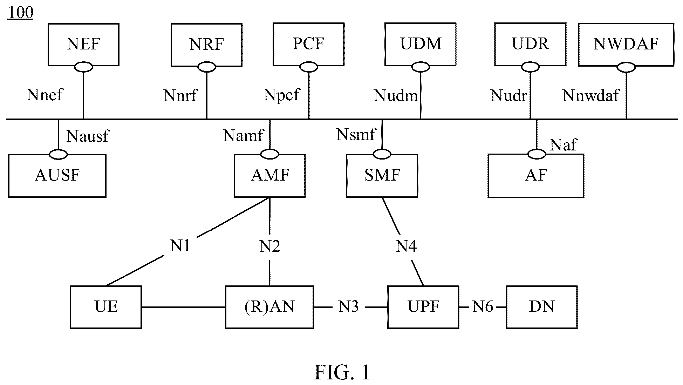

For example, FIG. 1 is a diagram of a network architecture applicable to an embodiment of this application. As shown in FIG. 1, the network architecture may specifically include three parts: a terminal device part, a data network (data network, DN) part, and an operator network part. The following briefly describes a function of a network element in each part.

The terminal device part may include a terminal device, and the terminal device may also be referred to as a user equipment (user equipment, UE). The terminal device in this application is a device having a wireless transceiver function, and may communicate with one or more core network (core network, CN) devices through an access network device (which may also be referred to as an access device) in a radio access network (radio access network, RAN) 140. The terminal device may also be referred to as an access terminal, a terminal, a subscriber unit, a subscriber station, a mobile station, a remote station, a remote terminal, a mobile device, a user terminal, a user agent, a user apparatus, or the like. The terminal device may be deployed on land, where the deployment includes indoor or outdoor, or handheld or vehicle-mounted deployment; may be deployed on water (for example, on a ship); or may be deployed in air (for example, on an airplane, a balloon, and a satellite). The terminal device may be a cellular phone (cellular phone), a cordless phone, a session initiation protocol (session initiation protocol, SIP) phone, a smartphone (smartphone), a mobile phone (mobile phone), a wireless local loop (wireless local loop, WLL) station, a personal digital assistant (personal digital assistant, PDA), or the like. Alternatively, the terminal device may be a handheld device having a wireless communication function, a computing device, another device connected to a wireless modem, a vehicle-mounted device, a wearable device, an uncrewed aerial vehicle device, a terminal in an internet of things or internet of vehicles, a terminal in any form in a 5G network or a future network, a relay user equipment, a terminal in a future evolved 6G network, or the like. The relay user equipment may be, for example, a 5G residential gateway (residential gateway, RG). For example, the terminal device may be a virtual reality (virtual reality, VR) terminal, an augmented reality (augmented reality, AR) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), or a wireless terminal in a smart home (smart home). The terminal device herein is a 3GPP terminal. A specific technology and a specific device form that are used by the terminal device are not limited in embodiments of this application.

The data network may also be referred to as a packet data network (packet data network, PDN), and is usually a network outside an operator network, for example, a third-party network. Certainly, in some implementations, the DN may alternatively be deployed by an operator, that is, the DN is a part of a PLMN. The operator network may access a plurality of data networks DNs, a plurality of services may be deployed on the data network DN, and services such as data and/or voice may be provided for the terminal device. The terminal device may further access the data network DN through the operator network, and use an operator service deployed on the data network DN and/or a service provided by a third party.

The operator network part includes but is not limited to a (radio) access network ((radio) access network, (R)AN) part and a core network (core network, CN) part.

The (R)AN may be considered as a sub-network of the operator network, and is an implementation system between a service node in the operator network and the terminal device. To access the operator network, the terminal device first passes through the (R)AN and then may be connected to the service node of the operator network through the (R)AN. The access network device (RAN device) in embodiments of this application is a device that provides a wireless communication function for the terminal device, and may also be referred to as a network device. The RAN device includes but is not limited to a next generation node base station (next generation node base station, gNB) in a 5G system, an evolved NodeB (evolved NodeB, eNB) in long term evolution (long term evolution, LTE), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmitting and receiving point (transmitting and receiving point, TRP), a transmitting point (transmitting point, TP), a pico (pico), a mobile switching center, a network device in a future network, or the like. In systems using different radio access technologies, devices with functions of the access network device may have different names. A specific technology and a specific device form that are used by the access network device are not limited in embodiments of this application.

The CN part includes but is not limited to the following network functions (Network Functions, NFs): a user plane function (user plane function, UPF), a network exposure function (network exposure function, NEF), a network function repository function (network function repository function, NRF), a policy control function (policy control function, PCF), a UDM, a UDR, a network data analytics function (network data analytics function, NWDAF), an authentication server function (Authentication Server Function, AUSF), an access and mobility management function (access and mobility management function, AMF), a session management function (session management function, SMF), and an application function (application function, AF).

The following further briefly describes functions of the NFs included in a CN.
1. The UPF is a gateway for communication between the operator network and the data network DN, and mainly provides user plane functions such as user packet forwarding and processing, connecting to the DN, a session anchor, and quality of service (quality of service, QoS) policy execution.
2. The NEF is a control plane function, and is mainly configured to securely expose, to the outside (for example, the AF), a service and a capability that are provided by a 3GPP network function. The NEF also allows an authenticated and authorized application function to securely provide information in a 3GPP network.
3. The NRF is a control plane function that may be configured to maintain real-time information of a network function and a service in a network.
4. The PCF is a control plane function. It supports a unified policy framework to govern network behavior and provide policy rules and subscription information relevant for policy decisions to another control function.
5. The UDM is a control plane function, and is mainly responsible for storing subscription data of a subscriber in the operator network. The subscription data may also be referred to as subscription information. The information stored in the UDM may be used for authentication and authorization for accessing the operator network by the terminal device. Currently, a UDM data organization format defined in a protocol includes three data fields: subscription data type (subscription data types), data key (data key), and data sub key (data sub key). Table 1 shows a format of subscription data that is of a terminal device and that is in the UDM. For a more complete table, refer to an existing standard protocol.

**Table 1 Subscription data of a terminal device (UE subscription data types keys)**

| Subscription data type | Data key | Data sub key |
|---|---|---|
| Access and mobility subscription data (access and mobility subscription data) | Subscription permanent identifier (subscription permanent identifier, SUPI) | Service PLMD ID and optional network identifier (network identifier, NID) |
| SMF selection subscription data (SMF selection subscription data) | SUPI | Service PLMD ID and optional NID |
| UE context data on an SMF (UE context in SMF data) | SUPI | Single network slice selection assistance information (single network slice selection assistance information, S-NSSAI) |
| Short message service (Short Message Service, SMS) management subscription data (SMS management subscription data) | SUPI | Service PLMD ID and optional NID |
| SMS subscription data (SMS subscription data) | SUPI | Service PLMD ID and optional NID |

The subscription data of the terminal device may be obtained from the UDM by using an Nudm_SDM_Get service operation. Content of each input of the service operation corresponds to the data organization format shown in Table 1. Details are as follows:
required inputs (inputs, required): a network function (network function, NF) ID, a subscription data type, and a data key for each subscription data type (data key for each subscription data type(s)), where the NF ID indicates a function network element that obtains data; and
optional inputs (inputs, optional): a data sub key and another possible input. For descriptions of the another possible input, refer to an existing standard protocol.

6. The UDR is a control plane function, and is mainly responsible for data storage and obtaining, for example, providing functions of subscription data storage and obtaining for the UDM, policy data storage and obtaining for the PCF, and storing and obtaining of NF group ID (group ID) information of a user.

Currently, a UDR data organization format defined in a protocol includes four data fields: data set (data set), data subset (data subset), data key, and data sub key.

Data may be obtained from the UDR by using an Nudr_DM_Query service operation. Content of each input of the service operation corresponds to the UDR data organization format. Details are as follows:
required inputs: a data set identifier (data set identifier) and a data key; and
optional inputs: a data subset identifier (data subset identifier) and a data sub key.

A new data record may be inserted into the UDR by using an Nudr_DM_Create service operation. Content of each input of the service operation corresponds to the UDR data organization format. Details are as follows:
required inputs: a data set identifier and a data key; and
optional inputs: a data subset identifier and a data sub key.

7. The NWDAF is a control plane function. A main function of the NWDAF is to collect data from the NF, an external application function (application function, AF), an operations, administration and maintenance (operations, administration and maintenance, OAM) system, and the like, and provide the NF and the AF with NWDAF service registration, data exposure, data analytics, and the like.

8. The AUSF is a control plane function and is usually used for level-1 authentication, to be specific, authentication between a terminal device (a subscriber) and the operator network.

9. The AMF is a control plane function, and is mainly responsible for access control and mobility management for accessing the operator network by a terminal device, for example, including functions such as mobility status management, temporary user identity assignment, and user authentication and authorization.

10. The SMF is a control plane function, and is mainly responsible for session-related functions such as session management (for example, session establishment, modify, and release), selection and control of a UPF network function, service and session continuity (service and session continuity, SSC) mode selection, and roaming.

11. The AF is a control plane function, and is configured to provide application layer information. Currently, AFs are mainly classified into two types. A first type is an AF that is deployed by an operator and that is considered to be trusted by the operator, and the AF of this type may directly interact with another network function in a network. A second type is an AF that an operator does not allow direct access to a network function, for example, a third-party AF, and the AF of this type may interact with another network function in the network through the NEF. The AF in embodiments of this application is a second-type AF.

In FIG. 1, Nnef, Nnrf, Npcf, Nudm, Nudr, Nnwdaf, Nausf, Namf, Nsmf, N1, N2, N3, N4, N6, and N9 are interface sequence numbers. For example, for meanings of the interface sequence numbers, refer to meanings defined in the 3GPP standard protocol. The meanings of the interface sequence numbers are not limited in this application. It should be noted that a name of an interface between the network functions in FIG. 1 is merely an example. In a specific implementation, the name of the interface in the system architecture may alternatively be another name. This is not limited in this application. In addition, names of messages (or signaling) transmitted between the foregoing network elements are also merely examples, and do not constitute any limitation on functions of the messages. In the network architecture shown in FIG. 1, the network elements may communicate with each other through interfaces. The interfaces between the network elements may be point-to-point interfaces, or may be service-based interfaces. This is not limited in this application.

It should be understood that the network architecture shown above is merely an example for description, and the network architecture applicable to embodiments of this application is not limited thereto. Any network architecture that can implement the functions of the network elements is applicable to embodiments of this application.

It should be further understood that the functions or the network elements such as the AMF, the SMF, the UPF, the PCF, the UDM, the AUSF, the UDR, the NEF, the NRF, and the AF shown in FIG. 1 may be understood as network elements configured to implement different functions, for example, may be combined into a network slice as required. These network elements may be independent devices, may be integrated into a same device to implement different functions, may be network elements in a hardware device, may be software functions running on dedicated hardware, or may be instantiated virtualization functions on a platform (for example, a cloud platform). Specific forms of the network elements are not limited in this application.

It should be further understood that the foregoing names are defined merely for distinguishing between different functions, and should not constitute any limitation on this application. This application does not exclude a possibility of using other names in a 6G network and another future network. For example, in the 6G network, a part or all of the foregoing network elements may still use terms in 5G, or may use other names.

Currently, the second-type AF may request a service from a network through an NEF. After receiving the service request from the AF, the NEF may perform an authorization check on the service request, to be specific, check whether the service can be opened to the AF or check whether the AF is authorized to obtain the service. In a process of the authorization check, the NEF determines whether to perform a user consent check (user consent check) based on the service request and a local policy of the operator. When the user consent check needs to be performed, if a UE context of the NEF includes no user consent parameter, the NEF needs to obtain subscription data of a UE from a UDM by using identification information of the UE.

When the service requested by the AF needs to obtain data of a plurality of UEs, the NEF needs to obtain subscription data of the UEs from the UDM by separately using identification information of the plurality of UEs as indexes. Based on this query manner, as the scale of UE data required by the AF increases, query efficiency is very low.

For the foregoing problem, this application provides a method for creating configuration information and a communication apparatus. A core network device (for example, a network exposure function network element or a data management network element) may create application configuration information for an AF. The application configuration information includes subscription information of all or some terminal devices related to the AF. When the AF requests a service, the core network device may query data within a range of the application configuration information. This helps improve query efficiency. For ease of understanding of embodiments of this application, several basic concepts in embodiments of this application are briefly described. It should be understood that the basic concepts described below are described based on basic concepts specified in a current protocol. However, this does not mean that embodiments of this application can be applied only to an existing system. These concepts are all functional descriptions, and specific names are not limited.

### 1. Application configuration information

The application configuration information may also be referred to as application configuration data, application subscription information, application subscription data, application information, application data, AF configuration information, AF configuration data, AF subscription information, AF subscription data, AF information, AF data, or the like, and is data managed at a granularity of an AF. One AF may correspond to one or more pieces of application configuration information. When one AF corresponds to a plurality of pieces of application configuration information, subscription identification information corresponding to the application configuration information may be used for differentiation. In comparison with the conventional technology in which a data management network element queries all subscription data one by one based on identification information of terminal devices, data can be queried in a smaller range based on the application configuration information. This helps improve query efficiency, and can efficiently complete authorization of a service requested by the AF and a user consent check.

Application configuration information corresponding to one AF includes information about all or some terminal devices related to the AF. The terminal device related to the AF may be a terminal device whose subscription data includes related information or a related entry of the AF. For example, the subscription data of the terminal device includes identification information of the AF. The information about the terminal device herein may be index information used to index subscription data of the terminal device, for example, identification information of the terminal device, or may be the subscription data of the terminal device. When the information about the terminal device is identification information of the terminal device, the identification information of the terminal device included in the application configuration information is identification information of the terminal device that allows the AF to obtain data. When the information about the terminal device is subscription data of the terminal device, the application configuration information may include subscription data of a terminal device that allows the AF to obtain data, or may include subscription data of all the terminal devices related to the AF.

Optionally, the application configuration information may be a recombination of existing subscription data in a UDM. In this application, the UDM may implement the recombination, or an NEF may perform the recombination after obtaining the subscription data from the UDM. In other words, the UDM or the NEF may create or generate the application configuration information.

In an implementation, the application configuration information may be a view (or referred to as a virtual table) obtained based on the existing subscription data in the UDM. The view is a table exported from one or more base tables (or views). It is different from the base table and is a virtual table. A database stores only a definition of the subscription data view but not data corresponding to the view. The data is still stored in the original base table.

In another implementation, the application configuration information may be a new data value set (or referred to as a data table) obtained based on the existing subscription data in the UDM.

A data organization format of the application configuration information varies with a network element that stores the application configuration information. A specific data organization format of the application configuration information is not limited in this application.

For example, the application configuration information may be stored in the UDM.

Table 2 shows a data organization format of the application configuration information stored in the UDM.

**Table 2 Data organization format (1) of application configuration information**

| Subscription data type | Data key | Data sub key |
|---|---|---|
| Application subscription data, application configuration data, or application authorization data | Identification information of an AF and/or subscription identification information | User consent |
| | | Information type |
| | | Usage purpose |
| | | Usage scope |
| | | Identification information of a terminal device |

As shown in Table 2, the subscription data type corresponding to the application configuration information is the application subscription data, the application configuration data, or the application authorization data; the data key corresponding to the application configuration information is the identification information of the AF and/or the subscription identification information; and the data sub key corresponding to the application configuration information is one or more of the user consent, the information type (information type), the usage purpose (purpose), the usage range, or the identification information of the terminal device.

It should be understood that the application subscription data, the application configuration data, and the application authorization data are merely examples. The subscription data type corresponding to the application configuration information may alternatively be another data type that can indicate that the application configuration information is managed at a granularity of an application (or the AF). The identification information of the AF is information that can uniquely determine the AF, for example, an AF ID or an external application ID (external App ID) of the AF. The subscription identification information may be transaction reference identification information (transaction reference ID). The subscription identification information may be specified by the NEF, may be generated by the UDM, may be specified by the AF, or may be determined by a plurality of network elements (for example, the AF and a core network element) through negotiation. This is not limited. The information type indicates a type of data that the AF expects to obtain, for example, location data of the terminal device and 5G core network (5G core, 5GC) assistance data. The foregoing usage purpose indicates a usage purpose after the AF obtains the data. The foregoing usage range indicates a usage range after the AF obtains the data, for example, a geographical area in which the AF can use the data.

It should be noted that the information type, the usage purpose, the usage range, or the identification information of the terminal device is optional information. In addition, the foregoing information type, usage purpose, usage range, or identification information of the terminal device may alternatively be stored in a field (field) of the application configuration information; or a part of the information is stored in the data sub key, and a remaining part is stored in a field.

In the data organization format shown in Table 2, the application configuration information is stored by adding a new type under the subscription data type. The application subscription data, the application configuration data, or the application authorization data belongs to a data type under the subscription data type. In this application, application configuration information application may alternatively be stored by adding application subscription data, application configuration data, or application authorization data that is parallel to subscription data of a terminal device (UE subscription data). For example, in a standard protocol, the subscription data of the terminal device may correspond to a table of a data organization format, and the application subscription data, the application configuration data, or the application authorization data may correspond to a table of another data organization format. The table of the data organization format corresponding to the application subscription data, the application configuration data, or the application authorization data may be shown in Table 3. Table 3 is a data organization format of application configuration information (or application subscription data, application configuration data, or application authorization data).

**Table 3 Data organization format (2) of application configuration information**

| Subscription data type | Data key | Data sub key |
|---|---|---|
| User consent | Identification information of an AF and/or subscription identification information | Information type |
| | | Usage purpose |
| | | Usage scope |
| | | Identification information of a terminal device |

As shown in Table 3, the subscription data type corresponding to the application configuration information is the user consent (user consent); the data key corresponding to the application configuration information is the identification information of the AF and/or the subscription identification information; and the data sub key corresponding to the application configuration information is one or more of the information type (information type), the usage purpose (purpose), the usage range, or the identification information of the terminal device. For descriptions of the identification information of the AF, the subscription identification information, the information type, the usage purpose, the usage range, and the identification information of the terminal device, refer to Table 2. Details are not described again.

For example, the application configuration information may be stored in a UDR.

Table 4 shows a data organization format of the application configuration information stored in the UDR.

**Table 4 Data organization format (3) of application configuration information**

| Data set | Data subset | Data key | Data sub key |
|---|---|---|---|
| Subscription data (subscription data) | Application subscription data, application configuration data, or application authorization data | Identification information of an AF and/or subscription identification information | User consent |
| | | | Information type |
| | | | Usage purpose |
| | | | Usage scope |
| | | | Identification information of a terminal device |

As shown in Table 4, the data set corresponding to the application configuration information is the subscription data; the data subset corresponding to the application configuration information is the user consent, the application subscription data, the application configuration data, or the application authorization data; the data key corresponding to the application configuration information is the identification information of the AF and/or the subscription identification information; and the data sub key corresponding to the application configuration information is one or more of the information type, the usage purpose, the usage range, or the identification information of the terminal device. For descriptions of the identification information of the AF, the subscription identification information, the information type, the usage purpose, the usage range, and the identification information of the terminal device, refer to Table 2. Details are not described again.

The subscription data in Table 4 is a data type that has been defined in a standard. In Table 4, the application configuration information is stored by adding a new type under the subscription data. The application subscription data, the application configuration data, or the application authorization data belongs to a data type under the subscription data.

Table 5 shows another data organization format of the application configuration information stored in the UDR.

**Table 5 Data organization format (4) of application configuration information**

| Data set | Data subset | Data key | Data sub key |
|---|---|---|---|
| Subscription data | User consent | Identification information of an AF and/or subscription identification information | Information type |
| | | | Usage purpose |
| | | | Usage scope |
| | | | Identification information of a terminal device |

As shown in Table 5, the data set corresponding to the application configuration information is the subscription data; the data subset corresponding to the application configuration information is the user consent; the data key corresponding to the application configuration information is the identification information of the AF and/or the subscription identification information; and the data sub key corresponding to the application configuration information is one or more of the information type, the usage purpose, the usage range, or the identification information of the terminal device. For descriptions of the identification information of the AF, the subscription identification information, the information type, the usage purpose, the usage range, and the identification information of the terminal device, refer to Table 2. Details are not described again. A difference between the data organization format shown in Table 5 and that in the conventional technology is that the data key is the identification information of the AF and/or the subscription identification information, and the data sub key is one or more of the information type, the usage purpose, the usage range, or the identification information of the terminal device.

Table 6 shows another data organization format of the application configuration information stored in the UDR.

**Table 6 Data organization format (5) of application configuration information**

| Data set | Data subset | Data key | Data sub key |
|---|---|---|---|
| Application data (application data) | User consent, application subscription data, application configuration data, or application authorization data | Identification information of an AF and/or subscription identification information | Information type |
| | | | Usage purpose |
| | | | Usage scope |
| | | | Identification information of a terminal device |

As shown in Table 6, the data set corresponding to the application configuration information is the application data; the data subset corresponding to the application configuration information is the user consent, the application subscription data, the application configuration data, or the application authorization data; the data key corresponding to the application configuration information is the identification information of the AF and/or the subscription identification information; and the data sub key corresponding to the application configuration information is one or more of the information type, the usage purpose, the usage range, or the identification information of the terminal device. For descriptions of the identification information of the AF, the subscription identification information, the information type, the usage purpose, the usage range, and the identification information of the terminal device, refer to Table 2. Details are not described again.

The subscription data in Table 6 is an application type that has been defined in a standard. In Table 6, the application configuration information is stored by adding a new type under the application data. The user consent, the application subscription data, the application configuration data, or the application authorization data belongs to a data type under the application data.

Different from the manners shown in Table 4 to Table 6, in this application, application configuration information may alternatively be stored by adding application subscription data, application configuration data, or application authorization data that is parallel to subscription data or application data. Table 7 shows a data organization format of the application configuration information in this manner.

**Table 7 Data organization format (6) of application configuration information**

| Data set | Data subset | Data key | Data sub key |
|---|---|---|---|
| Application subscription data, application configuration data, or | User consent | Identification information of an AF and/or subscription | Information type |
| | | | Usage purpose |
| application authorization data | | identification information | Usage scope |
| | | | Identification information of a terminal device |

As shown in Table 7, the data set corresponding to the application configuration information is the application subscription data, the application configuration data, or the application authorization data; the data subset corresponding to the application configuration information is the user consent; the data key corresponding to the application configuration information is the identification information of the AF and/or the subscription identification information; and the data sub key corresponding to the application configuration information is one or more of the information type, the usage purpose, the usage range, or the identification information of the terminal device. For descriptions of the identification information of the AF, the subscription identification information, the information type, the usage purpose, the usage range, and the identification information of the terminal device, refer to Table 2. Details are not described again.

It should be noted that the user consent in the data subset shown in Table 7 may alternatively be left by default.

It should be further noted that the data organization formats of the application configuration information are merely examples, and a specific data organization format of the application configuration information is not limited in this application.

### 2. Data set, data subset, data key, data sub key, and field

For a UDM or a UDR, the data set, the data subset, the data key, the data sub key, and the field may be fields in a data organization format.

Data in the UDM may be divided in a multi-level division form, where the data key, the data sub key, and the field belong to different division levels. The data key, the data sub key, and the field may uniquely identify the data in the UDM, and may be used to index the data in the UDM.

In a possible manner, the data key and the data sub key may uniquely identify an attribute or an attribute group of a row in a data table in the UDM, and the field may uniquely identify a column in the data table in the UDM. The UDM may uniquely index data based on the data key, the data sub key, and the field.

Similarly, the data in the UDR may also be divided in a multi-level division form, where a data set, a data subset, a data key, a data sub key, and a field belong to different division levels. The data set and the data subset may uniquely identify a data set in the UDR, and the data key, the data sub key, and the field may be used to further determine data in the data set. In other words, the data set, the data subset, the data key, the data sub key, and the field may be used to index the data in the UDR.

In a possible manner, the data set, the data subset, the data key, and the data sub key may uniquely identify an attribute or an attribute group of a row in a data table in the UDR, and the field may uniquely identify a column in the data table in the UDR. The UDR may uniquely index data based on the data set, the data subset, the data key, the data sub key, and the field.

### 3. User consent parameter

The user consent parameter may also be referred to as user consent information or user consent data, and indicates whether a user consents to collecting (collecting), distributing (distributing), and/or analyzing (analyzing) data related to a terminal device.

### 4. User consent check

The user consent check is checking whether a user consents to collecting, distributing, and analyzing data related to a terminal device, and the check may be implemented based on the user consent parameter.

The following describes method embodiments provided in this application.

The method provided in this application may be performed by an application function network element, a network exposure function network element, a data management network element, and a data storage network element; or may be performed by modules or units (for example, circuits or chips) in the application function network element, the network exposure function network element, the data management network element, and the data storage network element. An example in which the application function network element is an AF, the network exposure function network element is an NEF, the data management network element is a UDM, and the data storage network element is a UDR is used below for description.

Optionally, the AF in this application may be an AF of an artificial intelligence (artificial intelligence, AI) service or a machine learning (machine learning, ML) service.

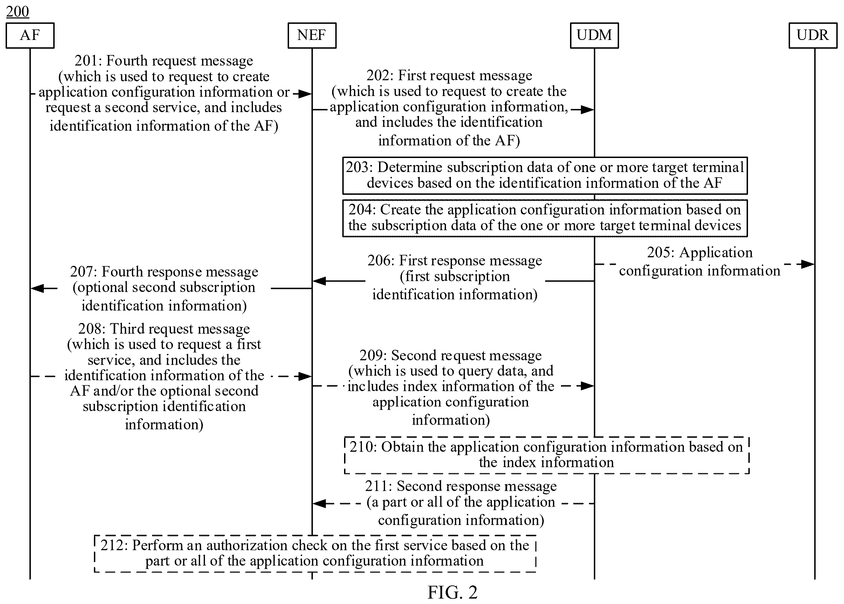

FIG. 2 is a schematic flowchart of a method 200 for creating configuration information according to this application. The method 200 includes at least a part of the following content.

Step 201: An AF sends a fourth request message to an NEF, in other words, the NEF receives the fourth request message from the AF.

The fourth request message is used to request to create application configuration information, or is used to request a second service.

That the fourth request message is used to request to create the application configuration information may be understood as that the AF triggers a procedure of creating the application configuration information. For example, the fourth request message may be referred to as an AF application configuration create request message.

That the fourth request message is used to request the second service may be understood as follows: The fourth request message is a message used to obtain data, the AF does not sense a subsequent procedure of creating the application configuration information, and the creation of the application configuration information is an internal procedure of a core network. For example, the fourth request message may be an Nnef_<Service-X> Request message. In this manner, service logic of the AF does not need to be changed.

In embodiments of this application, the fourth request message may include identification information of the AF, to clarify that the application configuration information is created for the AF. The identification information of the AF is information that can uniquely determine the AF, for example, an AF ID or an external application ID (External App ID) of the AF.

Optionally, the fourth request message may further include at least one of the following information: a first information type, a first usage purpose, a first usage range, or identification information of one or more first terminal devices.

The first information type may include one or more data types, and the one or more data types are types of data that the AF expects to obtain, for example, location data of the terminal device and 5GC assistance data.

The first usage purpose may include one or more usage purposes, and the one or more usage purposes are usage purposes after the AF obtains the data. Each usage purpose may correspond to one or more of the data types included in the first information type, and indicates a usage purpose obtained after the AF obtains the data of the type. Table 8 and Table 9 are two examples of a correspondence between a usage purpose and a data type.

**Table 8**

| | | | |
|---|---|---|---|
| Usage purpose 1 | Data type 1 | Data type 2 | Data type 3 |
| Usage purpose 2 | Data type 1 | Data type 3 | |

**Table 9**

| | | |
|---|---|---|
| Data type 1 | Usage purpose 1 | Usage purpose 2 |
| Data type 2 | Usage purpose 1 | |
| Data type 3 | Usage purpose 1 | Usage purpose 2 |

The first usage range may include one or more usage ranges, and the one or more usage ranges are usage ranges obtained after the AF obtains data. Each usage range may correspond to one or more of the data types included in the first information type, and indicates a usage range obtained after the AF obtains the data of the type. For a correspondence between a usage range and a data type, refer to the correspondence between the usage purpose and the data type. No example is provided for description.

The identification information of the one or more first terminal devices indicates terminal devices that the AF expects to obtain data from, or indicates terminal devices whose information is expected to be included in the application configuration information. For example, when the data that the AF requests to obtain is data related to the terminal device, the fourth request message may include the identification information of the one or more first terminal devices.

The identification information of the terminal device in embodiments of this application is information that can uniquely determine the terminal device. For example, the identification information of the terminal device may include at least one of the following information: an SUPI, a subscription concealed identifier (subscription concealed identifier, SUCI), a generic public subscription identifier (generic public subscription identifier, GPSI), a permanent equipment identifier (permanent equipment identifier, PEI), or (mobile subscriber international ISDN/PSTN number, MSISDN), where the ISDN is an integrated service digital network (Integrated Service Digital Network), and the PSTN is a public switched telephone network (public switched telephone network). The MSISDN may be understood as an identity that can be disclosed externally by a terminal, for example, a phone number of the terminal.

Optionally, when the fourth request message is used to request to create the application configuration information, the fourth request message may further include a data type of the application configuration information that is requested to be created, in other words, the AF specifies the data type of the application configuration information. For example, the data type of the application configuration information may be application subscription data, application configuration data, or application authorization data.

An occasion at which the AF sends the fourth request message is not limited in embodiments of this application. In a possible implementation, the AF may send the fourth request message to the NEF after completing offline service authorization with the core network and allowing the AF to start a data obtaining service. In another possible implementation, the AF may send the fourth request message to the NEF when the AF obtains, in another manner, for example, through an application layer or offline, user consent indications of terminal devices, expecting to establish application configuration information including the terminal devices.

Step 202: The NEF sends a first request message to a UDM based on the fourth request message, in other words, the UDM receives the first request message from the NEF.

The first request message is used to request to create the application configuration information, and the first request message may include the identification information of the AF.

Optionally, the first request message may further include at least one of the following information: the first information type, the first usage purpose, the first usage range, or the identification information of the one or more first terminal devices. For example, when the fourth request message includes the first information type, the first usage purpose, the first usage range, or the identification information of the one or more first terminal devices, the NEF may include the first information type, the first usage purpose, the first usage range, or the identification information of the one or more first terminal devices in the first request message.

Optionally, the first request message may further include the data type of the application configuration information that is requested to be created. It should be noted that, when the fourth request message carries the data type of the application configuration information, the NEF may determine, based on the fourth request message, the data type of the application configuration information that is requested to be created. When the fourth request message does not carry the data type of the application configuration information, for example, when the fourth request message is used to request the second service, the NEF may determine the data type of the application configuration information.

For descriptions of information included in the first request message, refer to the fourth request message. Details are not described herein again.

The first request message may reuse an existing message, or the first request message is an enhancement of an existing message. For example, the first request message may be an Nudm_SubscriberDataManagement message, for example, Nudm_SDM_Subscribe.

The first request message may alternatively be a new message. For example, the first request message may be an Nudm_AFSubscriber DataManagement message, for example, Nudm_AFSDM_Create or Nudm_AFSDM_Subscribe.

An information element carried in the first request message is not limited in embodiments of this application.

For example, when the application configuration information in the UDM uses the data organization format shown in Table 2, information carried in each information element of the first request message is as follows, and content in [] is information corresponding to or carried in the information element or the field:
required inputs: a subscription data type [the application subscription data, the application configuration data, or the application authorization data] and a data key [the identification information of the AF and/or first subscription identification information]; and
optional inputs: a data sub key [at least one of the first information type, the first usage range, the first usage purpose, or the identification information of the one or more first terminal devices], and another possible input.

For another example, when the application configuration information in the UDM uses the data organization format shown in Table 3, information carried in each information element of the first request message is as follows, and content in [] is information corresponding to or carried in the information element or the field:
required inputs: a subscription data type [user consent] and a data key [the identification information of the AF and/or first subscription identification information]; and
optional inputs: a data sub key [at least one of the first information type, the first usage range, the first usage purpose, or the identification information of the one or more first terminal devices], and another possible input.

In a possible implementation, when the fourth request message is used to request to create the application configuration information, after receiving the fourth request message, the NEF may determine, based on a local policy and the fourth request message, to generate the application configuration information for the AF, and then send the first request message to the UDM.

For example, after receiving the fourth request message, the NEF may determine, based on the local policy and the fourth request message, that there is no application configuration information that satisfies the fourth request message in the NEF, and then determine to generate the application configuration information, and send the first request message to the UDM.

For another example, when the fourth request message includes at least one of the first information type, the first usage purpose, the first usage range, or the identification information of the one or more first terminal devices, after receiving the fourth request message, the NEF may determine, based on the local policy and the at least one of the first information type, the first usage purpose, the first usage range, or the identification information of the one or more first terminal devices, whether a user consent check needs to be performed; and when the user consent check needs to be performed, the NEF determines to generate the application configuration information, and then sends the first request message to the UDM.

In another possible implementation, when the fourth request message is used to request the second service, after receiving the fourth request message, the NEF may perform an authorization check on the second service. In a process of the authorization check, the NEF determines, based on the second service and a local policy, whether a user consent check needs to be performed. If the user consent check needs to be performed, the NEF determines whether application configuration information of the AF exists. If the application configuration information of the AF does not exist, the NEF determines to generate the application configuration information for the AF, and sends the first request message to the UDM.

For example, that the NEF determines whether the application configuration information of the AF exists may include: The NEF determines whether a correspondence between the identification information of the AF and subscription identification information exists in the NEF, where the subscription identification information corresponds to the application configuration information. That the subscription identification information corresponds to the application configuration information may be understood as follows: The subscription identification information is subscription identification information specified by the NEF or the UDM when the application configuration information is generated or created.

It should be noted that, if one AF may correspond to a plurality of pieces of application configuration information, that the NEF determines whether the application configuration information of the AF exists may be replaced with that the NEF determines whether application configuration information supporting completing the user consent check exists.

Step 203: The UDM determines subscription data of one or more target terminal devices based on the identification information of the AF in the first request message.

In a possible implementation, the UDM obtains, by querying locally stored subscription data based on the identification information of the AF in the first request message, the subscription data of the one or more target terminal devices that includes the identification information of the AF.

In another possible implementation, the UDM obtains, from a UDR based on the identification information of the AF in the first request message, the subscription data of the one or more target terminal devices that includes the identification information of the AF.

The one or more target terminal devices may be terminal devices that allow the AF to obtain data, or may be all terminal devices that include the identification information of the AF. This is not limited.

In another possible implementation, if the first request message further includes at least one of the first information type, the first usage purpose, the first usage range, or the identification information of the one or more first terminal devices, based on the identification information of the AF and the at least one of the first information type, the first usage purpose, the first usage range, or the identification information of the one or more first terminal devices, the UDM locally stores or obtains, by querying from the UDR, the subscription data of the one or more target terminal devices that satisfies all conditions in the first request message.

For example, if the first request message includes the first information type, the first usage purpose, the first usage range, and the identification information of the AF, the UDM obtains the subscription data of the one or more target terminal devices that includes entries related to the first information type, the first usage purpose, the first usage range, and the identification information of the AF.

For another example, if the first request message includes the identification information of the one or more first terminal devices and the identification information of the AF, the subscription data of the one or more target terminal devices that is obtained by the UDM includes an entry related to the identification information of the AF, and the one or more target terminal devices belong to the one or more first terminal devices.

An indexing manner of the UDM is not specifically limited in embodiments of this application.

In a possible implementation, when the UDM locally stores the subscription data or queries the subscription data from the UDR based on the identification information of the AF and at least one of the first information type, the first usage purpose, the first usage range, and the identification information of the one or more first terminal devices, the UDM may first obtain, based on the identification information of the AF, subscription data of all terminal devices that include the identification information of the AF, and further obtain, based on the at least one of the first information type, the first usage purpose, the first usage range, or the identification information of the one or the one or more first terminal devices, the subscription data of the one or more target terminal devices by querying the subscription data of the terminal devices that includes the identification information of the AF.

When the first request message includes more than one of the first information type, the first usage purpose, the first usage range, or the identification information of the one or more first terminal devices, a specific indexing manner is not limited in this application.

For example, assuming that the first request message includes the first information type, the first usage purpose, the first usage range, and the identification information of the one or more first terminal devices, the UDM may perform indexing in a sequence of the identification information of the AF->the first information type->the first usage purpose->the first usage range->the identification information of the one or more first terminal devices; perform indexing in a sequence of the identification information of the AF->the identification information of the one or more first terminal devices->the first information type->the first usage purpose->the first usage range; or perform indexing in a sequence of the identification information of the AF->the first information type->the first usage purpose->the identification information of the one or more first terminal devices->the first usage range.

Step 204: The UDM creates the application configuration information based on the subscription data of the one or more target terminal devices.

For example, the UDM creates the application configuration information based on a user consent parameter in the subscription data of the one or more target terminal devices.

The application configuration information in embodiments of this application is data managed at a granularity of the AF, and may be a recombination of existing subscription data. For detailed descriptions, refer to a basic concept description part.

The data organization format of the application configuration information is not limited in this application. For example, if the application configuration information is stored in the UDM, the data organization format of the application configuration information may be the data organization format shown in Table 2 or Table 3 above.

Optionally, the method 200 may further include step 205: The UDM sends the application configuration information to the UDR, in other words, the UDR receives and stores the application configuration information from the UDM. In other words, after the application configuration information is created, the UDM may store the application configuration information in the UDR. When the application configuration information is stored in the UDR, the data organization format of the application configuration information may be the data organization format shown in any one of Table 4 to Table 7 above.

In a possible implementation, the UDM stores the application configuration information in the UDR by invoking an Nudr_DM_Create service operation. The data organization format of the application configuration information in the UDR varies, and information carried in each information element of an Nudr_DM_Create request message also varies.

For example, when the application configuration information in the UDR uses the data organization format shown in Table 4, information carried in each information element or field in the Nudr_DM_Create request message is shown as follows, and content in [] is information carried in the information element or field:
required inputs: a data set identifier [the subscription data], and a data key [the identification information of the AF and/or the first subscription identification information]; and
optional inputs: a data subset identifier [the application subscription data, the application configuration data, or the application authorization data], and a data sub key [at least one of the user consent, the first information type, the first usage range, the first usage purpose, or the identification information of the one or more first terminal devices].

For another example, when the application configuration information in the UDR uses the data organization format shown in Table 5, information carried in each information element or field in the Nudr_DM_Create request message is shown as follows, and content in [] is information carried in the information element or field:
required inputs: a data set identifier [the subscription data], and a data key [the identification information of the AF and/or the first subscription identification information]; and
optional inputs: a data subset identifier [the user consent], and a data sub key [at least one of the first information type, the first usage range, the first usage purpose, or the identification information of the one or more first terminal devices].

For another example, when the application configuration information in the UDR uses the data organization format shown in Table 6, information carried in each information element or field in the Nudr_DM_Create request message is shown as follows, and content in [] is information carried in the information element or field:
required inputs: a data set identifier [application data], and a data key [the identification information of the AF and/or the first subscription identification information]; and
optional inputs: a data subset identifier [the user consent, the application subscription data, the application configuration data, or the application authorization data], and a data sub key [at least one of the first information type, the first usage range, the first usage purpose, or the identification information of the one or more first terminal devices].

For another example, when the application configuration information in the UDR uses the data organization format shown in Table 7, information carried in each information element or field in the Nudr_DM_Create request message is shown as follows, and content in [] is information carried in the information element or field:
required inputs: a data set identifier [the application subscription data, the application configuration data, or the application authorization data], and a data key [the identification information of the AF and/or the first subscription identification information]; and
optional inputs: a data subset identifier [the user consent], and a data sub key [at least one of the first information type, the first usage range, the first usage purpose, or the identification information of the one or more first terminal devices].

Step 206: The UDM sends a first response message to the NEF, in other words, the NEF receives the first response message from the UDM.

The first response message indicates that the application configuration information is successfully created. The first response message includes the first subscription identification information. The first subscription identification information corresponds to the application configuration information, and may be used to uniquely determine the application configuration information.

It should be noted that the first subscription identification information may be generated by the UDM, or may be specified by the NEF for the UDM. When the NEF specifies the first subscription identification information for the UDM, the first request message may further include the first subscription identification information.

Step 207: The NEF sends a fourth response message to the AF, in other words, the AF receives the fourth response message from the NEF.

When the fourth request message is used to request to create the application configuration information, the fourth response message indicates that the application configuration information is successfully created. When the fourth request message is used to request the second service, the fourth response message includes data of a terminal device that passes the authorization check.

Optionally, when the fourth request message is used to request to create the application configuration information, the fourth response message may further include second subscription identification information. The second subscription identification information corresponds to the application configuration information, and may also be used to uniquely determine the application configuration information. For example, when the fourth request message is used to request to create the application configuration information, the fourth response message may include the second subscription identification information.

It should be noted that the second subscription identification information may be the same as or different from the first subscription identification information. For example, if the NEF directly sends, to the AF, subscription identification information (namely, the first subscription identification information) returned by the UDM, the second subscription identification information is the same as the first subscription identification information. For another example, after receiving subscription identification information from the UDM, the NEF may generate new subscription identification information, and store a mapping relationship between the new subscription identification information and the subscription identification information from the UDM. In this case, the new subscription identification information (namely, the second subscription identification information) is different from the subscription identification information (namely, the first subscription identification information) from the UDM.

After the application configuration information is created, if the terminal device and the UDM negotiate to modify the subscription data of the terminal device, and modified subscription data of the terminal device affects content of the application configuration information, the application configuration information may be modified in this case, so that the application configuration information keeps synchronized with the subscription data of the terminal device.

The foregoing describes the procedure of creating the application configuration information, and the following describes an authorization procedure based on the application configuration information. It should be noted that, the procedure of creating the application configuration information and the authorization procedure based on the application configuration information may be implemented together, or may be used as independent embodiments and are implemented separately. This is not limited.

In a possible implementation, the method 200 may further include step 208 to step 212.

Step 208: The AF sends a third request message to the NEF, in other words, the NEF receives the third request message from the AF.

The third request message is used to request a first service. The third request message may include the identification information of the AF and/or the second subscription identification information. When the AF corresponds to one piece of application configuration information, the third request message may carry the identification information of the AF, carry the second subscription identification information, or carry the identification information of the AF and the second subscription identification information, to indicate a specific piece of application configuration information used by the NEF to perform an authorization check. When the AF corresponds to a plurality of pieces of application configuration information, the third request message may carry the second subscription identification information, or carry the identification information of the AF and the second subscription identification information, to indicate a specific piece of application configuration information used by the NEF to perform an authorization check.

It is considered that there may be a plurality of versions of NEFs, some versions of NEFs support performing authorization checks by using the application configuration information, and some versions of NEFs may not support performing authorization checks by using the application configuration information. In this case, the third request message may further include indication information, and the indication information indicates that the application configuration information has been created, indicates that the application configuration information may be used to perform the authorization check, or indicates that the application configuration information may be obtained by using the identification information of the AF and/or the second subscription identification information. In this way, when an NEF that supports performing an authorization check by using the application configuration information receives the third request message, the NEF may obtain the application configuration information from the UDM based on the identification information of the AF and/or the second subscription identification information, to perform the authorization check based on the application configuration information. When an NEF that does not support performing an authorization check by using the application configuration information receives the third request message, the NEF may ignore the indication information, and obtain subscription data of a terminal device by using identification information of the terminal device, to complete the authorization check.

In addition, the AF may switch the NEF, to be specific, the AF may create the application configuration information through an NEF 1 and request the first service through an NEF 2. In this case, the indication information is carried in the third request message, so that the NEF 2 can learn that the AF has created the application configuration information, and may obtain the application configuration information from the UDM by using the identification information of the AF and/or the second subscription identification information, to perform an authorization check.

Optionally, the third request message may further include at least one of the following information: a second information type, a second usage purpose, a second usage range, or identification information of one or more second terminal devices. The second information type may include one or more data types, and the one or more data types are types of data required by the first service, for example, location data of the terminal device and 5GC assistance data. The second usage purpose may include one or more usage purposes, and the one or more usage purposes are usage purposes after the AF obtains data. The second usage range may include one or more usage ranges, and the one or more usage ranges are usage ranges obtained after the AF obtains the data. The identification information of the one or more second terminal devices indicate terminal devices whose data is required by the first service. For detailed descriptions of the second information type, the second usage purpose, the second usage range, and the identification information of the one or more second terminal devices, refer to the first information type, the first usage purpose, the first usage range, or the identification information of the one or more first terminal devices. Details are not described again.

For example, the third request message may be an Nnef_<Service-X> Request message.

Step 209: The NEF sends a second request message to the UDM based on the third request message, in other words, the UDM receives the second request message from the NEF.

The second request message is used to query data. The second request message may include index information of the application configuration information. The index information of the application configuration information may include the identification information of the AF and/or the first subscription identification information. When the NEF stores a mapping relationship between the second subscription identification information and the first subscription identification information, if the third request message received by the NEF includes the second subscription identification information, the NEF may determine, based on the mapping relationship, the first subscription identification information corresponding to the second subscription identification information, and include the first subscription identification information in the second request message.

In a possible implementation, after receiving the third request message, the NEF performs an authorization check on the first service. In a process of the authorization check, the NEF determines, based on the first service and the local policy, whether a user consent check needs to be performed. If the user consent check needs to be performed, the NEF sends the second request message to the UDM, and obtains the application configuration information from the UDM to perform the user consent check.

In addition, if the AF indicates, by using additional indication information, that the authorization check is performed by using the application configuration information, the NEF obtains the application configuration information based on the identification information of the AF and/or the first subscription identification information only when the third request message carries the indication information. Otherwise, the NEF obtains subscription data of a terminal device by using identification information of the terminal device. It should be further noted that if the NEF that receives the third request message does not support performing an authorization check by using the application configuration information, the NEF also obtains the subscription data of the terminal device by using the identification information of the terminal device.

Optionally, the second request message may further include at least one of the following information: the second information type, the second usage range, the second usage purpose, or the identification information of the one or more second terminal devices. For example, when the third request message includes the second information type, the second usage range, the second usage purpose, or the identification information of the one or more second terminal devices, the NEF includes the second information type, the second usage range, the second usage purpose, or the identification information of the one or more second terminal devices in the second request message.

In a possible implementation, the second request message may be an Nudm_SDM_Get request message. The data organization format of the application configuration information in the UDM varies, and information carried in each information element of the Nudm_SDM_Get request message also varies.

For example, when the application configuration information in the UDM uses the data organization format shown in Table 2, information carried in each information element of the Nudm_SDM_Get request message is as follows, and content in [] is information corresponding to or carried in the information element or the field:
required inputs: an NF ID [an NEF ID], a subscription data type [the application subscription data, the application configuration data, or the application authorization data], and a data key [the identification information of the AF and/or first subscription identification information]; and
optional inputs: a data sub key [at least one of the second information type, the second usage range, the second usage purpose, or the identification information of the one or more second terminal devices], and another possible input.

For another example, when the application configuration information in the UDM uses the data organization format shown in Table 3, information carried in each information element of the Nudm_SDM_Get request message is as follows, and content in [] is information corresponding to or carried in the information element or the field:
required inputs: an NF ID [an NEF ID], a subscription data type [the user consent], and a data key [the identification information of the AF and/or the first subscription identification information]; and
optional inputs: a data sub key [at least one of the second information type, the second usage range, the second usage purpose, or the identification information of the one or more second terminal devices], and another possible input.

Step 210: The UDM obtains the application configuration information based on the index information in the second request message.

In a possible implementation, when the application configuration information is stored in the UDM, the UDM locally searches for the application configuration information based on the index information.

In another possible implementation, when the UDM stores the application configuration information in the UDR, in other words, when the UDM performs step 205, the UDM searches the UDR for the application configuration information based on the index information.

In another possible implementation, when the second request message further includes at least one of the second information type, the second usage range, the second usage purpose, or the identification information of the one or more second terminal devices, the UDM obtains a part or all of the application configuration information locally or from the UDR based on the index information and at least one of the second information type, the second usage range, the second usage purpose, or the identification information of the one or more second terminal devices.

For a case in which the UDM obtains a part or all of the application configuration information from the UDR, in a possible implementation, the UDM may obtain data from the UDR by using an Nudr_DM_Query request message. The data organization format of the application configuration information in the UDR varies, and information carried in each information element of the Nudr_DM_Query request message also varies. A manner in which each information element of the Nudr_DM_Query request message carries the information is similar to a manner in which each information element of the Nudr_DM_Create request message carries the information. A difference is that a data sub key of the Nudr_DM_Query request message carries at least one of the second information type, the second usage range, the second usage purpose, or the identification information of the one or more second terminal devices. For more detailed descriptions, refer to step 205. Details are not described herein again.

Step 211: The UDM sends a second response message to the NEF, in other words, the NEF receives the second response message from the UDM.

The second response message includes a part or all of the application configuration information. When the second request message does not include the second information type, the second usage range, the second usage purpose, or the identification information of the one or more second terminal devices, the UDM may return all of the application configuration information to the NEF. When the second request message includes at least one of the second information type, the second usage range, the second usage purpose, or the identification information of the one or more second terminal devices, the UDM may return, to the NEF, information that is in the application configuration information and that satisfies the conditions, in other words, the UDM may return a part of the application configuration information to the NEF.

Step 212: The NEF performs the authorization check on the first service based on the received part or all of the application configuration information.

For example, the NEF performs a user consent check on the first service based on the received part or all of the application configuration information.

Then, the NEF may return data of a terminal device that passes the authorization check to the AF.

In this way, according to the method 200, the UDM may pre-create application configuration information for the AF based on a request of the NEF. When the AF requests a service, the UDM may query data in a range of the application configuration information, to help improve query efficiency. In addition, in comparison with carrying identification information of a large quantity of terminal devices each time, the data is queried by using the identification information of the AF and/or subscription identification information, signaling overheads can be reduced. When the NEF attaches additional condition information such as an information type, a usage purpose, a usage range, and an identification information list of the terminal devices, a query speed may be further accelerated.

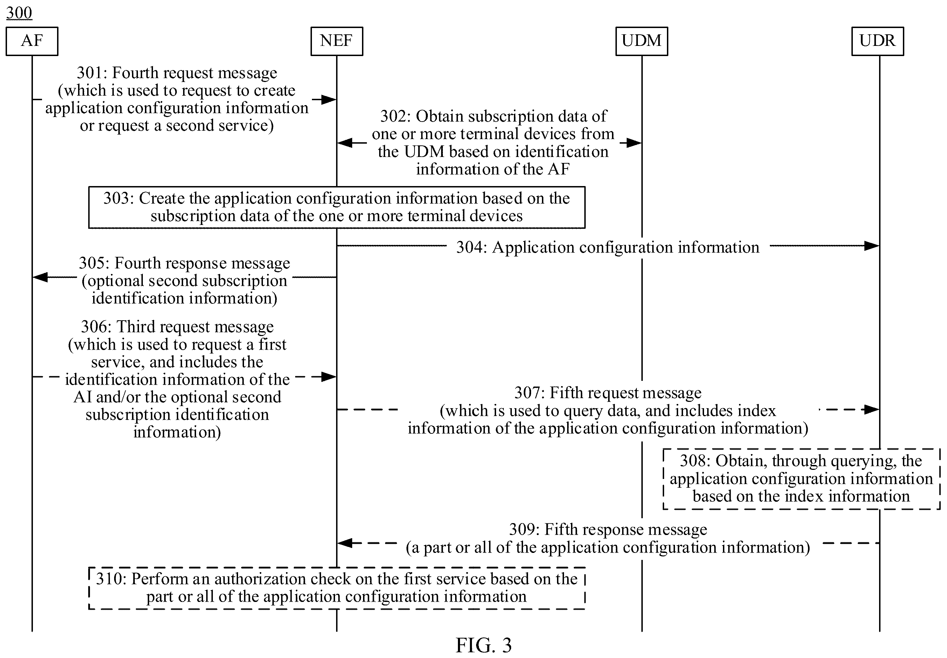

In the method for creating configuration information shown in FIG. 2, the NEF requests the UDM to create the application configuration information for the AF. This application further provides a method for creating application configuration information for an AF by an NEF. The following describes the method with reference to FIG. 3.

FIG. 3 is a schematic flowchart of a method 300 for creating configuration information according to this application. The method 300 includes at least a part of the following content.

Step 301: An AF sends a fourth request message to an NEF, in other words, the NEF receives the fourth request message from the AF. The fourth request message is used to request to create application configuration information, or is used to request a second service.

An implementation of step 301 is the same as that of step 201, and reference may be made to step 201. Details are not described herein again.

Step 302: The NEF obtains subscription data of one or more terminal devices from a UDM based on the fourth request message.

In embodiments of this application, the NEF may obtain the subscription data of the terminal device from the UDM by using an existing mechanism. Specifically, the NEF may obtain the subscription data of the terminal device from the UDM by using an Nudm_SDM_Get service operation. Specific inputs of the service operation are as follows:
required inputs: an NF ID [an NEF ID], a subscription data type [user consent], and a data key [an SUPI]; and
optional inputs: a data sub key [at least one of a first information type, a first usage purpose, a first usage range, or identification information of one or more first terminal devices] and another possible input.

The UDM returns the requested subscription data of the terminal device to the NEF. If the NEF provides at least one of the first information type, the first usage purpose, the first usage range, or the identification information of the one or more first terminal devices, the UDM returns the subscription data of the terminal device that satisfies the requirement. If the NEF does not provide the first information type, the first usage purpose, the first usage range, or the identification information of the one or more first terminal devices, the UDM returns subscription data of all terminal devices related to the AF or subscription data of all terminal devices that allow the AF to obtain data.

For more detailed descriptions of obtaining the subscription data of the terminal device by the NEF from the UDM by using the Nudm_SDM_Get service operation, refer to an existing standard protocol. Details are not described herein again.

Step 303: The NEF creates the application configuration information based on the subscription data of the one or more terminal devices that is returned by the UDM.

In a possible implementation, the NEF creates the application configuration information based on a local policy and a user consent parameter in the subscription data of the one or more terminal devices that is returned by the UDM.

The application configuration information in embodiments of this application is data managed at a granularity of the AF, and may be a recombination of existing subscription data. For detailed descriptions, refer to a basic concept description part.

Step 304: The NEF sends the application configuration information to the UDM, in other words, the UDM receives and stores the application configuration information from the NEF.

That the NEF sends the application configuration information to the UDM may be understood as follows: The NEF stores the application configuration information in the UDM.

When the application configuration information is stored in a UDR, a data organization format of the application configuration information may be the data organization format shown in any one of Table 4 to Table 7 above.

In a possible implementation, the UDM stores the application configuration information in the UDR by invoking an Nudr_DM_Create service operation. The data organization format of the application configuration information in the UDR varies, and information carried in each information element of the Nudr_DM_Create request message also varies. For specific descriptions, refer to step 205. Details are not described herein again.

Step 305: The NEF sends a fourth response message to the AF, in other words, the AF receives the fourth response message from the NEF.

When the fourth request message is used to request to create the application configuration information, the fourth response message indicates that the application configuration information is successfully created. When the fourth request message is used to request the second service, the fourth response message includes data of a terminal device that passes an authorization check.

An implementation of step 305 is the same as that of step 207, and reference may be made to step 207. Details are not described herein again.

After the application configuration information is created, if the terminal device and the UDM negotiate to modify the subscription data of the terminal device, and modified subscription data of the terminal device affects content of the application configuration information, the application configuration information may be modified in this case, so that the application configuration information keeps synchronized with the subscription data of the terminal device.

The foregoing describes a procedure of creating the application configuration information, and the following describes an authorization procedure based on the application configuration information. It should be noted that, the procedure of creating the application configuration information and the authorization procedure based on the application configuration information may be implemented together, or may be used as independent embodiments and are implemented separately. This is not limited.

In a possible implementation, the method 300 may further include step 306 to step 310.

Step 306: The AF sends a third request message to the NEF, in other words, the NEF receives the third request message from the AF. The third request message is used to request a first service. The third request message may include identification information of the AF and/or second subscription identification information.

An implementation of step 306 is the same as that of step 208, and reference may be made to step 208. Details are not described herein again.

Step 307: The NEF sends a fifth request message to the UDR based on the third request message, in other words, the UDR receives the fifth request message from the NEF.

The fifth request message is used to query data. The fifth request message may include index information of the application configuration information. The index information of the application configuration information may include the identification information of the AF and/or first subscription identification information. When the NEF stores a mapping relationship between the second subscription identification information and the first subscription identification information, if the third request message received by the NEF includes the second subscription identification information, the NEF may determine, based on the mapping relationship, the first subscription identification information corresponding to the second subscription identification information, and include the first subscription identification information in the second request message.

In a possible implementation, after receiving the third request message, the NEF performs an authorization check on the first service. In a process of the authorization check, the NEF determines, based on the first service and the local policy, whether a user consent check needs to be performed. If the user consent check needs to be performed, the NEF sends the fifth request message to the UDM, and obtains the application configuration information from the UDM to perform the user consent check.

In addition, if the AF indicates, by using additional indication information, that the authorization check is performed by using the application configuration information, the NEF obtains the application configuration information based on the identification information of the AF and/or the first subscription identification information only when the third request message carries the indication information. Otherwise, the NEF obtains subscription data of a terminal device by using identification information of the terminal device. It should be further noted that if the NEF that receives the third request message does not support performing an authorization check by using the application configuration information, the NEF also obtains the subscription data of the terminal device by using the identification information of the terminal device.

Optionally, the fifth request message may further include at least one of the following information: a second information type, a second usage range, a second usage purpose, or identification information of one or more second terminal devices. For example, when the third request message includes the second information type, the second usage range, the second usage purpose, or the identification information of the one or more second terminal devices, the NEF includes the second information type, the second usage range, the second usage purpose, or the identification information of the one or more second terminal devices in the fifth request message.

In a possible implementation, the fifth request message may be an Nudr_DM_Query request message. The data organization format of the application configuration information in the UDR varies, and information carried in each information element of the Nudr_DM_Query request message also varies. A manner in which each information element of the Nudr_DM_Query request message carries the information is similar to a manner in which each information element of the Nudr_DM_Create request message carries the information. A difference is that a data sub key of the Nudr_DM_Query request message carries at least one of the second information type, the second usage range, the second usage purpose, or the identification information of the one or more second terminal devices. For more detailed descriptions, refer to step 205. Details are not described herein again.

Step 309: The UDR sends a fifth response message to the NEF, in other words, the NEF receives the fifth response message from the UDR.

The fifth response message includes a part or all of the application configuration information. When the fifth request message does not include the second information type, the second usage range, the second usage purpose, or the identification information of the one or more second terminal devices, the UDR may return all of the application configuration information to the NEF. When the fifth request message includes at least one of the second information type, the second usage range, the second usage purpose, or the identification information of the one or more second terminal devices, the UDR may return, to the NEF, information that is in the application configuration information and that satisfies the conditions, in other words, the UDR may return a part of the application configuration information to the NEF.

Step 310: The NEF performs the authorization check on the first service based on the received part or all of the application configuration information.

For example, the NEF performs the user consent check on the first service based on the received part or all of the application configuration information.

Then, the NEF may return data of a terminal device that passes the authorization check to the AF.

In this way, according to the method 300, the NEF may pre-create application configuration information for the AF and store the application configuration information in the UDR. When the AF requests a service, the NEF may request to query data in a range of the application configuration information, to help improve query efficiency. In addition, in comparison with carrying identification information of a large quantity of terminal devices each time, the data is queried by using the identification information of the AF and/or subscription identification information, signaling overheads can be reduced. When the NEF attaches additional condition information such as an information type, a usage purpose, a usage range, and an identification information list of the terminal devices, a query speed may be further accelerated.

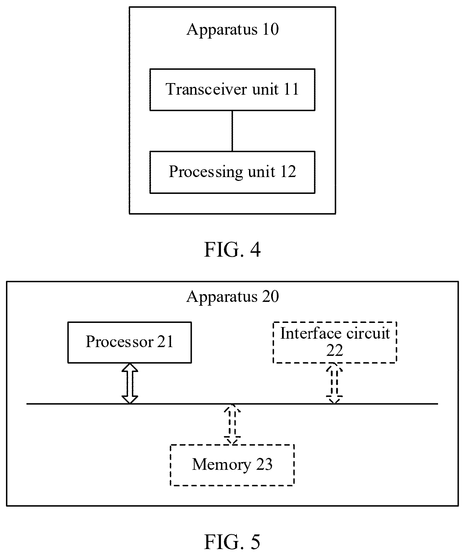

The foregoing describes in detail method embodiments provided in this application with reference to FIG. 2 and FIG. 3. The following describes apparatus embodiments of this application with reference to FIG. 4 and FIG. 5.

It may be understood that to implement functions in the foregoing embodiments, an apparatus in FIG. 4 or FIG. 5 includes a corresponding hardware structure and/or software module for performing each function. A person skilled in the art should be easily aware that, with reference to the units and method steps in the examples described in embodiments disclosed in this application, this application can be implemented in a form of hardware or a combination of hardware and computer software.

FIG. 4 and FIG. 5 are diagrams of structures of possible apparatuses according to embodiments of this application. The apparatuses may be configured to implement a function of the UDM, the NEF, the UDR, or the AF in the foregoing method embodiments, and therefore can also achieve the beneficial effects in the foregoing method embodiments.

As shown in FIG. 4, an apparatus 10 includes a transceiver unit 11 and a processing unit 12.

When the apparatus 10 is configured to implement the function of the UDM in FIG. 2, the transceiver unit 11 is configured to perform receiving and sending steps of the UDM, for example, step 202, step 205, step 206, step 209, and step 211; and the processing unit 12 is configured to perform a processing step of the UDM, for example, step 203, step 204, and step 210. When the apparatus 10 is configured to implement the function of the NEF in FIG. 2, the transceiver unit 11 is configured to perform receiving and sending steps of the NEF, for example, step 201, step 202, step 206, step 207, step 208, step 209, and step 211; and the processing unit 12 is configured to perform a processing steps of the NEF, for example, step 212. When the apparatus 10 is configured to implement the function of the UDR in FIG. 2, the transceiver unit 11 is configured to perform receiving and sending steps of the UDR, for example, step 205. When the apparatus 10 is configured to implement the function of the AF in FIG. 2, the transceiver unit 11 is configured to perform receiving and sending steps of the AF, for example, step 201, step 207, and step 208.

When the apparatus 10 is configured to implement the function of the UDM in FIG. 3, the transceiver unit 11 is configured to perform receiving and sending steps of the UDM, for example, step 302. When the apparatus 10 is configured to implement the function of the NEF in FIG. 3, the transceiver unit 11 is configured to perform receiving and sending steps of the NEF, for example, step 301, step 302, step 304, step 305, step 306, step 307, and step 309; and the processing unit 12 is configured to perform a processing step of the NEF, for example, step 303 and step 310. When the apparatus 10 is configured to implement the function of the UDR in FIG. 3, the transceiver unit 11 is configured to perform receiving and sending steps of the UDR, for example, step 307 and step 309; and the processing unit 12 is configured to perform a processing step of the UDR, for example, step 308. When the apparatus 10 is configured to implement the function of the AF in FIG. 3, the transceiver unit 11 is configured to perform receiving and sending steps of the AF, for example, step 301, step 305, and step 306.

For more detailed descriptions of the transceiver unit 11 and the processing unit 12, refer to related descriptions in the foregoing method embodiments. Details are not described herein.

As shown in FIG. 5, an apparatus 20 includes a processor 21. The processor 21 is coupled to a memory 23. The memory 23 is configured to store instructions. When the apparatus 20 is configured to implement the foregoing method, the processor 21 is configured to execute the instructions in the memory 23, to implement a function of the foregoing processing unit 12.

Optionally, the apparatus 20 further includes the memory 23.

Optionally, the apparatus 20 further includes an interface circuit 22. The processor 21 and the interface circuit 22 are coupled to each other. It may be understood that the interface circuit 22 may be a transceiver or an input/output interface. When the apparatus 20 is configured to implement the foregoing method, the processor 21 is configured to execute the instructions to implement the function of the foregoing processing unit 12, and the interface circuit 22 is configured to implement a function of the foregoing transceiver unit 11.

For example, when the apparatus 20 is a chip used in a UDM, an NEF, a UDR, or an AF, the chip implements a function of the UDM, the NEF, the UDR, or the AF in the foregoing method embodiments. The chip receives information from another module (for example, a radio frequency module or an antenna) in the UDM, the NEF, the UDR, or the AF, where the information is sent by another apparatus to the UDM, the NEF, the UDR, or the AF; or the chip sends information to another module (for example, a radio frequency module or an antenna) in the UDM, the NEF, the UDR, or the AF, where the information is sent by the UDM, the NEF, the UDR, or the AF to the another apparatus.

This application further provides a communication apparatus, including a processor. The processor is coupled to a memory. The memory is configured to store a computer program or instructions and/or data. The processor is configured to execute the computer program or the instructions stored in the memory, or read the data stored in the memory, to perform the method in the foregoing method embodiments. Optionally, there are one or more processors. Optionally, the communication apparatus includes the memory. Optionally, there are one or more memories. Optionally, the memory and the processor are integrated together or disposed separately.

This application further provides a chip, including a processor. The processor is coupled to a memory. The memory is configured to store a computer program or instructions. The processor is configured to execute the computer program or the instructions stored in the memory, to implement the method performed by the UDM, the NEF, the UDR, or the AF in the foregoing method embodiments.

This application further provides a computer-readable storage medium. The computer-readable storage medium stores computer instructions for implementing the method performed by the UDM, the NEF, the UDR, or the AF in the foregoing method embodiments.

This application further provides a computer program product, including instructions. When the instructions are executed by a computer, the method performed by the UDM, the NEF, the UDR, or the AF in the foregoing method embodiments is implemented.

This application further provides a communication system. The communication system includes at least one of the UDM, the NEF, the UDR, or the AF in the foregoing embodiments.

For explanations and beneficial effects of related content of any one of the apparatuses provided above, refer to the corresponding method embodiment provided above. Details are not described herein again.

It may be understood that the processor in embodiments of this application may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented by hardware, or may be implemented by the processor by executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a compact disc read-only memory (compact disc read-only memory, CD-ROM), or any other form of storage medium well-known in the art. For example, the storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a UDM, an NEF, a UDR, or an AF. Certainly, the processor and the storage medium may exist in the UDM, the NEF, the UDR, or the AF as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, a part of all of the procedures or functions in embodiments of this application are performed. The computer may be a general-purpose computer, a dedicated computer, a computer network, a network device, a user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

Unless otherwise stated, meanings of all technical and scientific terms used in embodiments of this application are the same as those usually understood by a person skilled in the technical field of this application. The terms used in this application are merely intended to describe objectives of the specific embodiments, and are not intended to limit the scope of this application. It should be understood that the foregoing descriptions are examples for description, and the foregoing examples are merely intended to help a person skilled in the art understand embodiments of this application, but are not intended to limit embodiments of this application to examples of specific values or specific scenarios. It is clear that a person skilled in the art can make various equivalent modifications or variations based on the examples described above, and such modifications and variations also fall within the scope of embodiments of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for creating configuration information, wherein the method comprises:
receiving, by a data management network element, a first request message from a network exposure function network element, wherein the first request message is used to request to create application configuration information, and the first request message comprises identification information of an application function network element;
determining, by the data management network element, subscription data of one or more target terminal devices based on the identification information of the application function network element;
creating, by the data management network element, the application configuration information based on the subscription data of the one or more target terminal devices; and
sending, by the data management network element to the network exposure function network element, a first response message in response to the first request message.

2. The method according to claim 1, wherein the subscription data of the one or more target terminal devices comprises the identification information of the application function network element.

3. The method according to claim 1 or 2, wherein
a subscription data type corresponding to the application configuration information is application subscription data, application configuration data, or application authorization data.

4. The method according to claim 1 or 2, wherein
the application configuration information corresponds to application subscription data, application configuration data, or application authorization data, and a subscription data type corresponding to the application configuration information is user consent.

5. The method according to claim 1 or 2, wherein the method further comprises:
sending, by the data management network element, the application configuration information to a data storage network element.

6. The method according to claim 5, wherein
a data set corresponding to the application configuration information is subscription data or application data, and a data subset corresponding to the application configuration information is application subscription data, application configuration data, or application authorization data.

7. The method according to claim 5, wherein
a data set corresponding to the application configuration information is application data, application subscription data, application configuration data, or application authorization data.

8. The method according to claim 7, wherein
a data subset corresponding to the application configuration information is user consent.

9. The method according to any one of claims 3 to 8, wherein
a data key corresponding to the application configuration information is the identification information of the application function network element and/or first subscription identification information corresponding to the application configuration information.

10. The method according to any one of claims 1 to 9, wherein the first request message further comprises at least one of the following information: a first information type, or identification information of one or more first terminal devices.

11. The method according to claim 10, wherein
the first information type or the identification information of the one or more first terminal devices is stored as a data sub key or a field corresponding to the application configuration information.

12. The method according to any one of claims 1 to 11, wherein
the application configuration information comprises identification information or the subscription data of the one or more target terminal devices.

13. The method according to claim 12, wherein the one or more target terminal devices are terminal devices that allow the application function network element to obtain data.

14. The method according to any one of claims 1 to 13, wherein the method further comprises:
receiving, by the data management network element, a second request message from the network exposure function network element, wherein the second request message is used to query data, and the second request message comprises index information of the application configuration information;
obtaining, by the data management network element, the application configuration information based on the index information; and
sending, by the data management network element, a second response message to the network exposure function network element, wherein the second response message comprises a part or all of the application configuration information.

15. The method according to claim 14, wherein
a value of a subscription data type of the second request message corresponds to application subscription data, application configuration data, or application authorization data; or
a value of a subscription data type of the second request message corresponds to user consent.

16. The method according to claim 15, wherein
a value of a data key of the second request message corresponds to the identification information of the application function network element and/or the first subscription identification information of the application configuration information.

17. The method according to any one of claims 14 to 16, wherein the second request message further comprises at least one of the following information: a second information type, a usage range, a usage purpose, or identification information of one or more second terminal devices.

18. The method according to claim 17, wherein
the second information type, the usage range, the usage purpose, or the identification information of the one or more second terminal devices is carried in a data sub key of the second request message.

19. The method according to any one of claims 14 to 18, wherein the method further comprises:
receiving, by the network exposure function network element, a third request message from the application function network element, wherein the third request message is used to request a first service, the third request message comprises the identification information of the application function network element and/or second subscription identification information, and the second subscription identification information corresponds to the application configuration information;
sending, by the network exposure function network element, the second request message to the data management network element based on the third request message;
receiving, by the network exposure function network element, a part or all of the application configuration information from the data management network element; and
performing, by the network exposure function network element, an authorization check on the first service based on the part or all of the application configuration information.

20. The method according to claim 19, wherein the third request message further comprises at least one of the following information: the second information type, the usage range, the usage purpose, or the identification information of the one or more second terminal devices.

21. The method according to claim 19 or 20, wherein the third request message further comprises indication information, and the indication information indicates that the application configuration information has been created.

22. The method according to any one of claims 1 to 21, wherein the method further comprises:
receiving, by the network exposure function network element, a fourth request message from the application function network element, wherein the fourth request message is used to request to create the application configuration information or is used to request a second service, and the fourth request message comprises the identification information of the application function network element;
sending, by the network exposure function network element, the first request message to the data management network element based on the fourth request message; and
receiving, by the network exposure function network element, the first response message from the data management network element.

23. The method according to any one of claims 19 to 21, wherein the method further comprises:
sending, by the application function network element, the third request message to the network exposure function network element.

24. The method according to claim 22, wherein the method further comprises:
sending, by the application function network element, the fourth request message to the network exposure function network element.

25. The method according to any one of claims 5 to 7, wherein the method further comprises:
receiving and storing, by the data storage network element, the application configuration information.

26. A communication apparatus, comprising a module or a unit configured to perform the method according to any one of claims 1 to 25.

27. A communication apparatus, comprising a processor and an interface circuit, wherein the interface circuit is configured to: receive a signal from another communication apparatus different from the communication apparatus and transmit the signal to the processor; or send a signal from the processor to another communication apparatus different from the communication apparatus, and the processor is configured to implement, through a logic circuit or by executing code instructions, the method according to any one of claims 1 to 25.

28. A chip, comprising a processor, wherein the processor is coupled to a memory, the memory is configured to store a computer program, and the processor is configured to execute the computer program stored in the memory, to implement the method according to any one of claims 1 to 25.

29. A computer-readable storage medium, wherein the storage medium stores a computer program or instructions; and when the computer program or the instructions are executed by a communication apparatus, the method according to any one of claims 1 to 25 is implemented.

30. A computer program product, comprising a computer program, wherein when the computer program runs, the method according to any one of claims 1 to 25 is implemented.

31. A communication system, comprising a data management network element, wherein the data management network element is configured to perform the method according to any one of claims 1 to 18.

32. The communication system according to claim 31, wherein the communication system further comprises at least one of a network exposure function network element, an application function network element, or a data storage network element, the network exposure function network element is configured to perform the method according to any one of claims 19 to 22, the application function network element is configured to perform the method according to claim 23 or 24, and the data storage network element is configured to perform the method according to claim 25.
